# EUROPEAN PATENT SPECIFICATION

(11) **EP 4 082 314 B1**
(45) Date of publication and mention of the grant of the patent: **04.06.2025**
(21) Application number: 22170828.2
(22) Date of filing: 29.04.2022
(51) Int. Cl.: A01B 59/06, A01B 59/041

(54) **LIFTING ASSEMBLY FOR A WORK VEHICLE**
HEBEVORRICHTUNG FÜR EIN ARBEITSFAHRZEUG
ENSEMBLE DE LEVAGE POUR UN VÉHICULE DE TRAVAIL

(30) Priority: 29.04.2021 IT 202100010838
(43) Date of publication of application: 02.11.2022
(73) Proprietor: CNH Industrial Italia S.p.A., 10156 Torino (IT)
(72) Inventor: Huber, Karl, 4100 Ottensheim (AT); HUBER, Roland, 4391 Waldhausen (AT); KOECK, Reinhard, 4360 Grein (AT)
(74) Representative: CNH Industrial IP Department

(56) References cited:
- EP-A1- 1 575 350
- US-A- 3 098 528

## Description

### TECHNICAL FIELD

The present invention concerns a lifting assembly, in particular a lifting assembly for an agricultural vehicle.

The present invention finds its preferred, although not exclusive, application in rear lifting system for a tractor.

### BACKGROUND OF THE INVENTION

Agricultural vehicle such as tractors usually comprises lifting systems configured to allow the connection of the tractor to a trailer or to implements to provide different work operations.

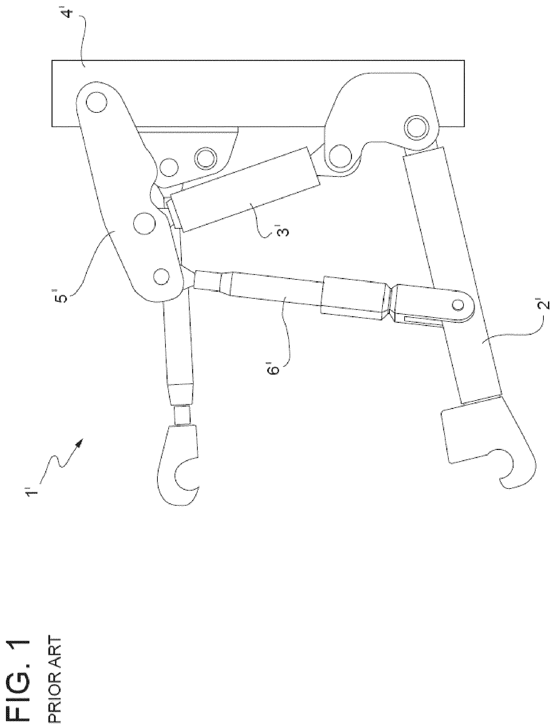

In particular, making reference to figure 1, known prior art lifting system 1' usually comprises a pair of arms 2' carried by a lifting cylinder 3' that is interposed between tractor's body 4' and a rocker element 5'. The rocker element 5' extends transversally over the tractor's body 4' to joint together the two arms 2' to compensate torque acting between these latter. The two arms are furthermore connected to the rocker element 5' via guide rods 6'.

It is evident that the above defined configuration leads to encumbrance problems, namely:
- The presence of guide rods 6' limits the useful space above the arms 2';
- The presence of rockers 5' limits the useful space above tractor's body 4'.

Moreover, it is clear that the presence of guide rods 6' and rockers 5' increases the weight of the lifting system 1', its complexity and its manufacturing costs.
Similar lifting systems are disclosed in EP1575350 A1 and in US3098528 A.

In particular, EP1575350 A1 discloses a lifting system for a work vehicle comprising two lower links element rotatably connected to the chassis of the work vehicle and supported by two respective lifting cylinders that are interposed between the chassis of the work vehicle and a rocker element pivotally carried by the chassis of the same work vehicle.

Similarly, US3098528 A describes a lifting system for a work vehicle, wherein the two lower links are carried by two lifting arms, which are in turn connected to the chassis of the work vehicle via brackets.

Both prior art documents fail to disclose that "each of said support structures comprise an upper portion configured to allow the connection with said actuator means".

Therefore, the need is felt to provide a lifting system that has reduced encumbrances while maintaining the same functionalities.

An aim of the present invention is to satisfy the above mentioned needs in an optimized and cost effective way.

### SUMMARY OF THE INVENTION

The aforementioned aim is reached by a lifting system and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematized lateral view of a lifting system as known in prior art;
- Figure 2 is a schematic perspective view of the lifting system according to the invention;
- Figure 3 is a schematic lateral view of the lifting system of figure 2 in a first operational condition; and
- Figure 4 is a schematic lateral view of the lifting system of figure 2 in a second operational condition.

### DETAILED DESCRIPTION OF THE INVENTION

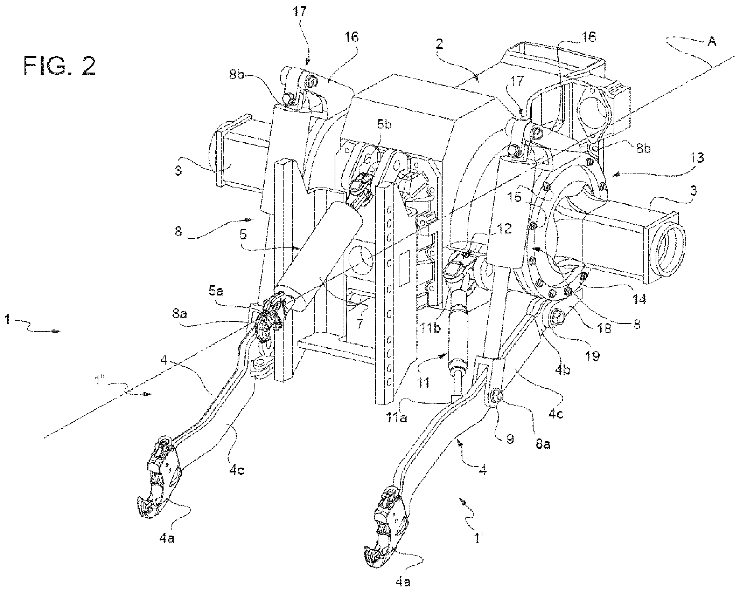

Figure 2 discloses a lifting system 1 for an agricultural vehicle, e.g. a tractor. The lifting system 1 comprises a right portion 1' and a left portion 1" with respect to a longitudinal axis A of the vehicle.

The vehicle is shown only in a portion 2 of the vehicle's body and comprising a portion of axle support 3, namely a right and a left axle supports, that both extends transversally with respect to longitudinal axis A and concentric one with respect to the other.

The lifting system 1 comprises a pair of lateral connecting arms 4, one for each between right portion 1' and left portion 1'', and a central connecting arm 5.

Both the lateral connecting arms 4 and the central connecting arm 5 defines a terminal connection portion 4a, 5a suitable for being connected to an element to be coupled with the agricultural vehicle.

Accordingly, the terminal connection portions 4a, 5a are placed on opposite side on the respective arm with respect to tractor's body 4 and are, exemplarily, shaped as a hook.

The terminal coupling portions 5b of the central arm 5, opposite to the terminal connection portion 5a is carried by portion 2 via a movable connection 6 such as a hinge. The central arm 5 is provided with adjusting means 7, e.g. a hydraulic top link, configured to vary the length between terminal portions 5a, 5b. The lateral arms 4 are each connected to the body portion 2, as described in the following, via a terminal coupling portion 4b opposite to the terminal connection portion 4a. Advantageously, the central portion 4c of each arm 4 is made of a rigid element, such as a metal bar, having a predefined cross-section; in the disclosed embodiment each arm is represented by a metal bar having a rectangular cross-section.

The lateral arms 4 are each further connected to the portion 2 via actuator means 8 comprising a lower extremity 8a connected to the central portion 4c of the lateral arm 4 and an upper extremity 8b connected to the body portion 2 as described in the following.

In particular, the lower extremity 8b is coupled to the central portion 4c via a hinge 9 configured to allow the rotation of central portion 4c about an axis transversal to axis A, preferably perpendicular to this latter.

The lateral arms 4 are each further connected to the portion 2 via stabilizer means 11 comprising an outer extremity 11a connected to the central portion 4c of the lateral arm 4 and an inner extremity 11b connected to the body portion 2. In particular, both the inner and outer extremities 11a, 11b are connected to the respective element via movable connections such as a hinge connection 12.

Preferably, stabilizer means 11 are connected to central portion 4c between the connection of lower extremity 8a with this latter and the terminal connection portion 4a.

Clearly, stabilizer means 11 may be realized as hydraulic dampers placed in a lower portion of the body 2 and inclined with respect to axis A or via equivalent mechanical links. Furthermore, they may be disposed differently with respect to the shown disposition.

Advantageously, the coupling terminal portions 4b of each arm 4 and the upper extremity 8b of each actuator 8 may be connected to a support structure 13 that can be selectively fixed to the body portion 2.

In particular, support structure 13 comprises a ring 14 that may be housed about axle support 3 via a selective fixing connection such as a threaded connection. Accordingly, a plurality of threaded elements 15 may be used for fixing the support structure 13 to the body 2 about the axle support 3.

The upper portion 8b of actuator 8 is connected to support structure 13 via an upper cantilevered portion 16. The upper cantilevered portion 16 is advantageously fixedly carried by support structure 13 and preferably realized as one piece with the latter. The upper portion 8b is carried by upper cantilevered portion 16 in a movable manner, e.g. via a hinge connection 17. The hinge connection 17 is advantageously realized to allow the rotation of actuator about two axis that are transversal with respect to axis A.

The coupling terminal portion 4b of lateral arm 4 is connected to support structure 3 via a lower cantilevered portion 18. The lower cantilevered portion 18 is advantageously fixedly carried by support structure 13 and preferably realized as one piece with the latter. The upper portion 8b is carried by lower cantilevered portion 16 in a movable manner, e.g. via a hinge connection 19. The hinge connection 19 is advantageously realized as a spherical joint.

As shown the upper and lower cantilevered portions 16, 18 are placed vertically opposite on support structure 13 with respect axle support 3.

The actuator 8 and the stabilizer means 11 are, as said, hydraulic cylinders that are controlled by a hydraulic circuit that may be design of any typology according to the necessity of the vehicle.

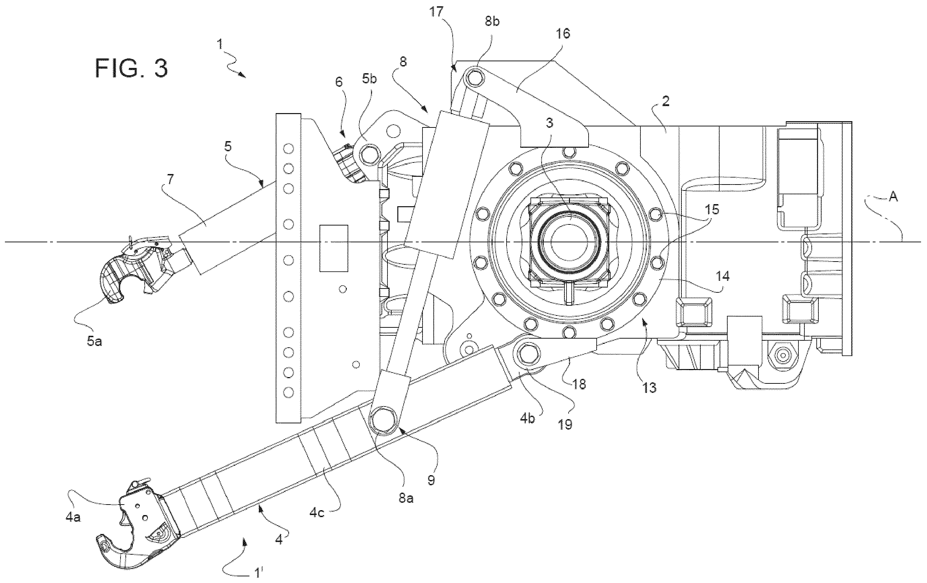

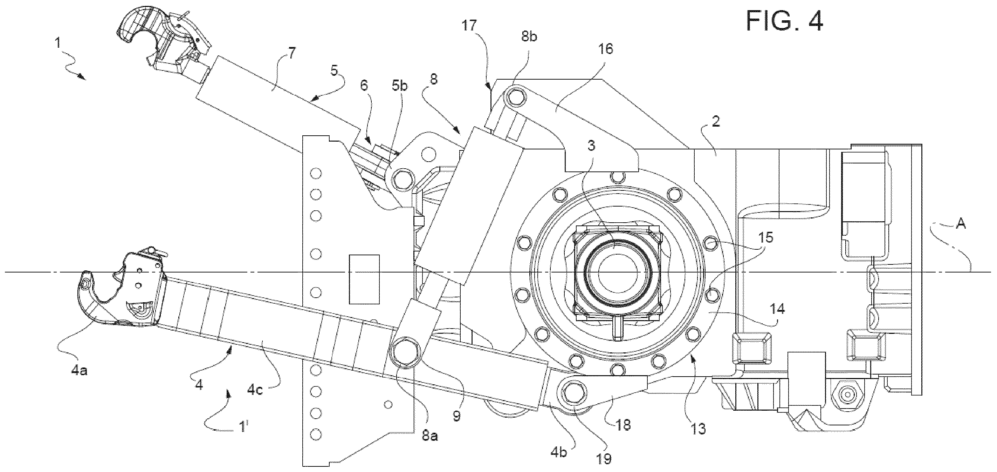

In particular, actuators 8 are controlled to extend or retract (see figures 3 and 4) to low or rise the respective lateral arm 4, i.e. to vary their inclination with respect to longitudinal axis A in a vertical plane.

Similarly, stabilizer means 11 are adjusted, manually or automatically, to extend or retract to space out or near together between themselves the lateral arm 4, i.e. to vary their inclination with respect to longitudinal axis A in a horizontal plane.

The control of extension or retraction of actuators 8 is achieved via a central control unit (not shown) that receives input on the necessary position of lateral arms 4 and that varies accordingly the actuation of actuators 8.

The lifting assembly 1 is furthermore provided with sensor means (not shown) configured to detect operational parameters related to the torque acting on lateral arms 4 with respect to body 2.

Advantageously, such sensor means may comprise torque means, e.g. placed in hinge 19 and configured to detect an inward or outward torque acting on lateral arm 3 and/or position means, e.g. angular position means, configured to detect the position of the terminal connection portion 4a of the lateral arm 4.

The control unit is configured to be electronically connected, e.g. via cables or wireless, to the aforementioned sensor means and to acquire the data detected by this latter to control the operation of actuator means 8.

Advantageously, the tractor may be provided with signaling means (not shown) configured to signal a condition of danger when said detected value is higher with respect to the threshold value.

In such case, the signaling means may comprise visual and/or sonic means configured to emit light or sounds to warn the driver if a dangerous condition is reached.

The operation of the above described lifting assembly 1 according to the invention is the following.

The unit may control the lifting or lowering of the lateral arms via actuator means 8. Indeed, the hydraulic circuit will impart an oil flow configured to retract or extend the hydraulic cylinder thereby lowering or lifting the lateral arm 4. Accordingly, the terminal connection portion 4a will move about a circumference having a radius equal to the length along axis A of lateral arm 4 and centered on hinge 4b.

Therefore, the lateral arm 4 may be lifted or lowered to allow the connection with a specific implement to be trailed by the tractor.

In particular, when the lateral arms 4 are connected to the respective implement that is trailed by the tractor, the sensor means may continuously, alternatively at preset interval time, detect the torque and/or angular position of the lateral arms 4.

Such detected value is acquired by the control unit and compared with a threshold torque and/or angular position of lateral arms 4 that is considered as maximum allowed torque and/or angular position for a safe operation of lateral arm 4, i.e. to avoid undesired failures. Such threshold value may be memorized in the control unit and derived from experimental values that are specific with respect to the geometry of the lifting system 1.

If such detected value is lower with respect to such threshold value, no action is carried out.

If such detected value is higher with respect to such threshold value, the control unit provides corrective actions. In particular, control unit may control actuator means 8 and/or stabilizer means 11 to vary the position of the lateral arms 4 thereby reducing the torque acting on these latter.

Thanks to the above defined lift assembly, it is possible to provide a method for limiting the torque acting between the lateral arms 4 and the tractors' body 2 comprising the followings steps:
- Detecting a value representing a torque acting between the lateral arms 4 and the tractor's body 2;
- Comparing such detected value with a memorized value;
- If such detected value is lower with respect to such memorized value, no actions are carried out;
- If such detected value is higher with respect to such memorized value, corrective actions are carried out.

In particular, the corrective actions may comprise a variation of position of the lateral arms 4.

Furthermore, the method may further comprise a signalization step wherein, if such detected value is higher with respect to such memorized value, signaling means are activated to warn the driver.

In view of the foregoing, the advantages of a lifting system 1 according to the invention are apparent.

The proposed system is lighter and comprises less elements with respect to known systems. In particular, guide rods and rockers that are usually used in known lifting systems are avoided.

Accordingly, the proposed system is more compact and economic.

Moreover, thanks to support structure 13 that can be selectively fixed to the body portion 2 of the tractor, this latter can be equipped of the lifting assembly only when needed.

Moreover, it is possible to use the same lifting assembly 1 on different tractors' body simply coupling the support structure 13 to the body portion on the latter, provided that a specific coupling portion is provided. In this way, there is a clear economic advantage for scale economy in production of the lifting assembly 1.

Moreover, it is clear that left and right lifting portions are therefore independent one with respect to the other.

Furthermore, the provided systems allows to avoid undesired failures in the lifting assembly due to the continuous monitoring of values related to the torque acting between lateral arms 4 and body portion 2. Indeed, such torque is supported by rockers in known system, that are absent in the present lifting assembly.

It is clear that modifications can be made to the described lifting system 1 which do not extend beyond the scope of protection defined by the claims.

For example, the shape of the elements comprised by the lifting assembly 1 may be varied according to the vehicle necessities.

Moreover, the signaling means may be present or absent, such as stabilizer means 11 that may be substituted by equivalent mechanical or hydraulic structures.

## Claims

1. Lifting system (1) for a work vehicle, said lifting system (1) comprising:
- a pair of lateral arms (4) defining a connection portion (4a) configured for allowing the connection of the lateral arm (4) to an element carried by the work vehicle and a coupling portion (4b) opposite to the connection portion (4a) and configured to allow a movable connection of the lateral arm (4) with respect to a body portion (2) of the work vehicle,
- a pair of actuator means (8) for actuating each of said pair of lateral arms (4) and each comprising a lower extremity (8a) connected to a corresponding lateral arm (4) between the connection and coupling portions (4a, 4b) and an upper extremity (8b) connected to said body portion (2);
wherein said lower extremity (8a) and said upper extremity (8b) of said actuator means (8) are connected to the respective element via movable connections (9, 17), said actuator means (8) being configured to increase or decrease their dimension to lift or lower said connection portion (4a) with respect to ground,
wherein said lifting system (1) comprises a pair of separate and distinct support structures (13), each adapted to be selectively carried by said body portion (2), and having an annular shape configured to surround an axle support (3) carried by said body portion (2),
wherein said upper extremity (8b) of said actuator means (8) and said coupling portion (4b) of said lateral arms (4) are both connected to a corresponding said support structure (13) and each of said support structures (13) comprise an upper portion (16) configured to allow the connection with said actuator means (8) and a lower portion (18) configured to allow the connection with said lateral arm (4), said upper portion (16) and lower portion (17) being placed on opposite vertical side with respect to said axle support (3).

2. Lifting system according to claim 1, wherein said support structures (13) are fixed to said body portion (2) via threaded means.

3. Lifting system according to claim 1 or 2, wherein said upper portion (16) of said support structure (13) extends cantilevered from said support structure (13) and is fixedly carried by the annular shape portion of said support structure (13).

4. Lifting system according to claim 1, 2 or 3, wherein said lower portion of said support structure (13) extends cantilevered from said support structure (13) and is fixedly carried by the annular shape portion of said support structure (13).

5. Lifting system according to any of said preceding claims, wherein said movable connections (9, 17) comprises a hinge connection.

6. Lifting system according to any of said preceding claims, wherein at least one between said movable connections (9, 17) comprises a two degrees of freedom connection.

7. Lifting system according to claim 4 to 6, wherein said lower portion (18) is connected to said lateral arm (4) via a hinge connection (19).

8. Lifting system according to any of said preceding claims, wherein said actuator means (8) comprise a hydraulic cylinder.

9. Lifting system according to any of said preceding claims, wherein said lifting system (1) comprises a central arm (5) that is laterally comprised between said lateral arms (4), said central arm (5) comprising a connection portion (5a) configured for allowing the connection of the latter to an element carried by the work vehicle and a coupling portion (5b) opposite to the connection portion (5a) and configured to allow a movable connection of the central arm (5) with respect to said body portion (2).

10. Lifting assembly according to any of the preceding claims, wherein said lateral arms (4) are further connected to said body portion (2) via stabilizer means (11) comprising an outer extremity (11a) connected to said lateral arm (4) and an inner extremity (11b) connected to said body portion (2).

11. Lifting assembly according to claim 10, wherein said stabilizer means (11) are hydraulic Cylinders.

12. Work vehicle comprising a lifting assembly (1) according to any of the preceding claims.

## Patentansprüche

1. Hebesystem (1) für ein Arbeitsfahrzeug, wobei das Hebesystem (1) aufweist:
ein Paar von seitlichen Armen (4), die einen Verbindungsabschnitt (4a) definieren, der dazu eingerichtet ist, die Verbindung des seitlichen Arms (4) mit einem vom Arbeitsfahrzeug getragenen Element zu ermöglichen, und einen dem Verbindungsabschnitt (4a) gegenüberliegenden Koppelabschnitt (4b), der dazu eingerichtet ist, eine bewegliche Verbindung des seitlichen Arms (4) relativ zu einem Karosserieabschnitt (2) des Arbeitsfahrzeugs zu ermöglichen,
ein Paar von Betätigungsmitteln (8) zur Betätigung jedes der seitlichen Arme (4), wobei jedes Betätigungsmittel ein unteres Ende (8a), das mit einem entsprechenden seitlichen Arm (4) zwischen dem Verbindungs- und dem Koppelabschnitt (4a, 4b) verbunden ist, und ein oberes Ende (8b) aufweist, das mit dem Karosserieabschnitt (2) verbunden ist,
wobei das untere Ende (8a) und das obere Ende (8b) der Betätigungsmittel (8) über bewegliche Verbindungen (9, 17) mit den jeweiligen Elementen verbunden sind, wobei die Betätigungsmittel (8) dazu eingerichtet sind, ihre Länge zu vergrößern oder zu verkleinern, um den Verbindungsabschnitt (4a) relativ zum Boden anzuheben oder abzusenken,
wobei das Hebesystem (1) ein Paar von separaten und unterschiedlichen Trägerstrukturen (13) aufweist, die jeweils dazu eingerichtet sind, wahlweise vom Karosserieabschnitt (2) getragen zu werden, und eine ringförmige Gestalt aufweisen, die dazu eingerichtet ist, eine vom Karosserieabschnitt (2) getragene Achsaufnahme (3) zu umgeben,
wobei das obere Ende (8b) der Betätigungsmittel (8) und der Koppelabschnitt (4b) der seitlichen Arme (4) jeweils mit einer entsprechenden Trägerstruktur (13) verbunden sind, und jede Trägerstruktur (13) einen oberen Abschnitt (16) aufweist, der dazu eingerichtet ist, die Verbindung mit den Betätigungsmitteln (8) zu ermöglichen, und einen unteren Abschnitt (18), der dazu eingerichtet ist, die Verbindung mit dem seitlichen Arm (4) zu ermöglichen, wobei der obere Abschnitt (16) und der untere Abschnitt (18) auf gegenüberliegenden vertikalen Seiten relativ zur Achsaufnahme (3) angeordnet sind.

2. Hebesystem nach Anspruch 1, wobei die Trägerstrukturen (13) mittels einer Gewindeeinrichtung am Karosserieabschnitt (2) befestigt sind.

3. Hebesystem nach Anspruch 1 oder 2, wobei der obere Abschnitt (16) der Trägerstruktur (13) kragarmartig aus der Trägerstruktur (13) herausragt und fest von dem ringförmigen Abschnitt der Trägerstruktur (13) getragen ist.

4. Hebesystem nach Anspruch 1, 2 oder 3, wobei der untere Abschnitt der Trägerstruktur (13) kragarmartig aus der Trägerstruktur (13) herausragt und fest von dem ringförmigen Abschnitt der Trägerstruktur (13) getragen ist.

5. Hebesystem nach einem der vorhergehenden Ansprüche, wobei die beweglichen Verbindungen (9, 17) eine Gelenkverbindung aufweisen.

6. Hebesystem nach einem der vorhergehenden Ansprüche, wobei mindestens eine der beweglichen Verbindungen (9, 17) eine Verbindung mit zwei Freiheitsgraden aufweist.

7. Hebesystem nach einem der Ansprüche 4 bis 6, wobei der untere Abschnitt (18) über eine Gelenkverbindung (19) mit dem seitlichen Arm (4) verbunden ist.

8. Hebesystem nach einem der vorhergehenden Ansprüche, wobei die Betätigungsmittel (8) einen Hydraulikzylinder aufweisen.

9. Hebesystem nach einem der vorhergehenden Ansprüche, wobei das Hebesystem (1) einen mittleren Arm (5) aufweist, der seitlich zwischen den seitlichen Armen (4) angeordnet ist, wobei der mittlere Arm (5) einen Verbindungsabschnitt (5a), der dazu eingerichtet ist, die Verbindung mit einem vom Arbeitsfahrzeug getragenen Element zu ermöglichen, und einen gegenüberliegenden Koppelabschnitt (5b) aufweist, der dazu eingerichtet ist, eine bewegliche Verbindung des mittleren Arms (5) relativ zum Karosserieabschnitt (2) zu ermöglichen.

10. Hebesystem nach einem der vorhergehenden Ansprüche, wobei die seitlichen Arme (4) des Weiteren über Stabilisierungsmittel (11) mit dem Karosserieabschnitt (2) verbunden sind, die ein äußeres Ende (11a), das mit dem seitlichen Arm (4) verbunden ist, und ein inneres Ende (11b) aufweisen, das mit dem Karosserieabschnitt (2) verbunden ist.

11. Hebesystem nach Anspruch 10, wobei die Stabilisierungsmittel (11) Hydraulikzylinder sind.

12. Arbeitsfahrzeug, das ein Hebesystem (1) nach einem der vorhergehenden Ansprüche aufweist.

## Revendications

1. Système de levage (1) pour un véhicule de travail, ledit système de levage (1) comprenant :
une paire de bras latéraux (4) définissant une partie de raccordement (4a) configurée pour permettre le raccordement du bras latéral (4) à un élément soutenu par le véhicule de travail et une partie d'accouplement (4b) opposée à la partie de raccordement (4a) et configurée pour permettre un raccordement mobile du bras latéral (4) par rapport à une partie de carrosserie (2) du véhicule de travail,
une paire de moyens d'actionnement (8) pour actionner chacune desdites paires de bras latéraux (4) et comprenant chacun une extrémité inférieure (8a) raccordée à un bras latéral correspondant (4) entre les parties de raccordement et d'accouplement (4a, 4b) et une extrémité supérieure (8b) raccordée à ladite partie de carrosserie (2),
ladite extrémité inférieure (8a) et ladite extrémité supérieure (8b) desdits moyens d'actionnement (8) sont raccordées à l'élément respectif par le biais de raccordements mobiles (9, 17), lesdits moyens d'actionnement (8) étant configurés pour augmenter ou diminuer leur dimension afin de soulever ou d'abaisser ladite partie de raccordement (4a) par rapport au sol,
dans lequel ledit système de levage (1) comprend une paire de structures de support séparées et distinctes (13), chacune adaptée pour être soutenues de manière sélective par ladite partie de carrosserie (2), et ayant une forme annulaire configurée pour entourer un support d'essieu (3) soutenu par ladite partie de carrosserie (2),
dans laquelle ladite extrémité supérieure (8b) dudit moyen d'actionnement (8) et ladite partie d'accouplement (4b) desdits bras latéraux (4) sont toutes deux raccordées à une structure de support correspondante (13) et chacune desdites structures de support (13) comprend une partie supérieure (16) configurée pour permettre le raccordement avec ledit moyen d'actionnement (8) et une partie inférieure (18) configurée pour permettre le raccordement avec ledit bras latéral (4), ladite partie supérieure (16) et ladite partie inférieure (17) étant placées sur le côté vertical opposé par rapport audit support d'essieu (3).

2. Système de levage selon la revendication 1, dans lequel lesdites structures de support (13) sont fixées à ladite partie de carrosserie (2) par le biais de moyens filetés.

3. Système de levage selon la revendication 1 ou la revendication 2, dans lequel ladite partie supérieure (16) de ladite structure de support (13) s'étend en porte-à-faux par rapport à ladite structure de support (13) et est soutenue de manière fixe par la partie de forme annulaire de ladite structure de support (13).

4. Système de levage selon la revendication 1, 2 ou 3, dans lequel ladite partie inférieure de ladite structure de support (13) s'étend en porte-à-faux par rapport à ladite structure de support (13) et est soutenue de manière fixe par la partie de forme annulaire de ladite structure de support (13).

5. Système de levage selon l'une quelconque des revendications précédentes, dans lequel lesdits raccordements mobiles (9, 17) comprennent un raccordement à charnière.

6. Système de levage selon l'une quelconque des revendications précédentes, dans lequel au moins un parmi lesdits raccordements mobiles (9, 17) comprend un raccordement à deux degrés de liberté.

7. Système de levage selon les revendications 4 à 6, dans lequel la partie inférieure (18) est raccordée au bras latéral (4) par un raccordement à charnière (19).

8. Système de levage selon l'une quelconque des revendications précédentes, dans lequel lesdits moyens d'actionnement (8) comprennent un cylindre hydraulique.

9. Système de levage selon l'une quelconque des revendications précédentes, dans lequel ledit système de levage (1) comprend un bras central (5) qui est compris latéralement entre lesdits bras latéraux (4), ledit bras central (5) comprenant une partie de raccordement (5a) configurée pour permettre le raccordement de ce dernier à un élément soutenu par le véhicule de travail et une partie d'accouplement (5b) opposée à la partie de raccordement (5a) et configurée pour permettre un raccordement mobile du bras central (5) par rapport à ladite partie de carrosserie (2).

10. Ensemble de levage selon l'une quelconque des revendications précédentes, dans lequel lesdits bras latéraux (4) sont en outre raccordés à ladite partie de carrosserie (2) par le biais de moyens de stabilisation (11) comprenant une extrémité extérieure (11a) raccordée audit bras latéral (4) et une extrémité intérieure (11b) raccordée à ladite partie de carrosserie (2).

11. Ensemble de levage selon la revendication 10, dans lequel lesdits moyens de stabilisation (11) sont des vérins hydrauliques.

12. Véhicule de travail comprenant un ensemble de levage (1) selon l'une quelconque des revendications précédentes.
